# FASCICULE DE BREVET EUROPEEN

(11) **EP 0 375 541 B1**
(45) Date de publication et mention de la délivrance du brevet: **02.06.1993**
(21) Numéro de dépôt: 89403556.7
(22) Date de dépôt: 19.12.1989
(51) Int. Cl.: G01F 23/68

(54) **Dispositif de mesure du niveau de liquide contenu dans un réservoir de hauteur importante**
Vorrichtung zum Messen des Niveaus einer in einem sehr hohen Behälter enthaltenen Flüssigkeit
Device for measuring the level of liquid contained in a deep reservoir

(30) Priorité: 20.12.1988 FR 8816829
(43) Date de publication de la demande: 27.06.1990
(73) Titulaire: JAEGER, F-92303 Levallois-Perret (FR)
(72) Inventeur: Baux, Christian, F-92300 Levallois (FR); Chantome, Isabelle, F-75008 Paris (FR)
(74) Mandataire: Martin, Jean-Jacques

(56) Documents cités:
- FR-A- 2 578 049
- GB-A- 2 086 576

## Description

La présente invention concerne le domaine des dispositifs de mesure du niveau ou du volume de liquide contenu dans un réservoir.

La présente invention concerne plus précisément un dispositif de mesure du niveau ou du volume du liquide contenu dans un réservoir comprenant un carter qui loge un élément définissant deux pistes électriques séparées généralement verticales dont l'une au moins électriquement résistante, et un flotteur apte à suivre le niveau de liquide qui porte un curseur apte à relier les deux pistes.

La valeur de la résistance mesurée entre les deux extrémités supérieures des pistes est directement représentative du niveau et/ou du volume précité(s).

De nombreux dispositifs du type indiqué ci-dessus ont déjà été proposés.

Les documents FR-A-2 550 338, FR-A-2 503 861 et FR-2 534 375 décrivent des exemples de réalisation de ces dispositifs.

Le document FR-A-2578049 décrit un autre exemple de réalisation de ces dispositifs. Selon ce document, le dispositif de mesure du niveau de liquide contenu dans un réservoir comprend un équipage mobile à flotteur qui suit le niveau du liquide et un organe transducteur comprenant deux réglettes planes adossées et généralement verticales, l'une solidaire d'un capuchon supérieur porte par la paroi supérieure du réservoir, l'autre munie d'un élément résistif principal généralement vertical dispose en regard du trajet en déplacement d'un curseur électriquement conducteur solidaire de l'équipage mobile, ladite autre réglette ayant sa base sollicitée élastiquement contre le fond du réservoir.

Le document GB-A-2086576 décrit un dispositif de surveillance de niveau de fluide congru pour surveiller le niveau de carburant dans un réservoir de bateau. Ce dispositif comprend un tube contenant plusieurs interrupteurs commandés par flotteurs places à des niveaux différents pour commuter lorsque le niveau de fluide passe par leur valeur particulière. Chaque interrupteur commande par un flotteur commande un relais associe pour alimenter des lampes associées et désalimenter des lampes préalablement alimentées, et commander également des systèmes d'alarme sonores.

Le problème posé est de concevoir des dispositifs de mesure du type indique ci-dessus en regard des documents FR-A-2550338, FR-A-2503861, FR-A-2534375 et FR-A-2578049, présentant une hauteur importante par exemple supérieure à un mètre.

L'élément définissant les deux pistes électriques étant réalisé généralement à l'aide de bandes allongées découpées dans un circuit imprimé, qui présentent par conséquent une mauvaise tenue mécanique, il apparaît nécessaire, pour des dispositifs de hauteur importante de disposer d'entretoises entre l'élément définissant les deux pistes et le carter.

Cependant, le flotteur devant, pour des raisons de sensibilité, d'équilibre et de coût, être réalisé sous forme d'un corps annulaire entourant l'élément précité, les entretoises font obstacle au déplacement du flotteur sur toute la hauteur des pistes.

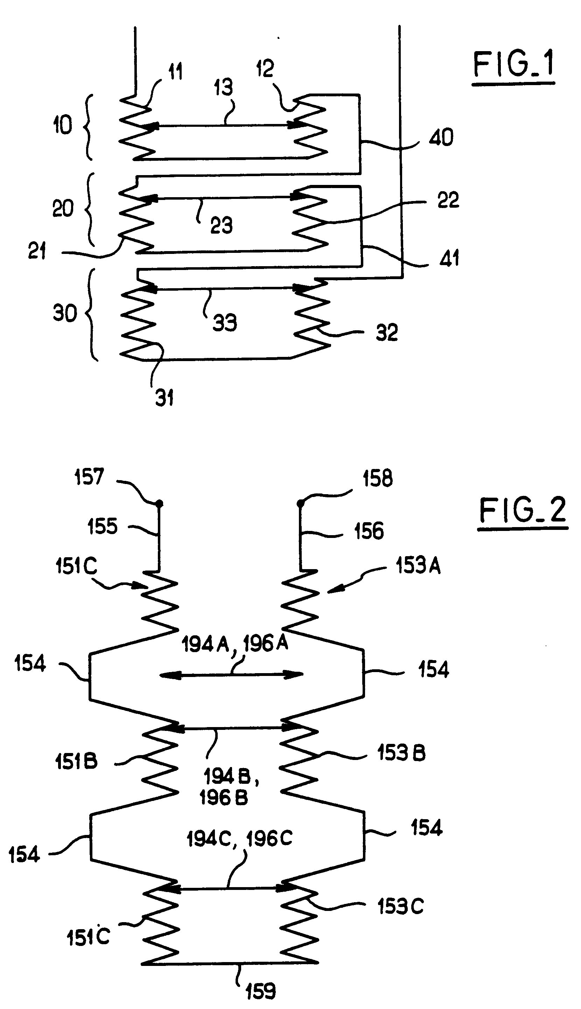

Pour tenter d'éliminer cet inconvénient, après recherche, la Demanderesse a envisagé, comme illustré sur la figure 1 annexée, de superposer plusieurs dispositifs connus en soi, comprenant chacun deux pistes conductrices et un flotteur, placés respectivement de part et d'autre d'entretoises et de connecter les pistes correspondantes en série.

Sur la figure 1 annexée, on a référencé 10, 20, 30, trois dispositifs connus superposés. Le dispositif 10 comprend deux pistes 11. 12, et un flotteur qui porte un curseur 13. le dispositif 20 comprend deux pistes 21, 22, et un flotteur qui porte un curseur 23. le dispositif 30 comprend deux pistes 31, 32 et un flotteur qui comprend un curseur 33. Les liaisons reliant les pistes 12 et 21 et 22 et 31 en série sont référencées 40, 41. les entretoises précitées sont placées entre les dispositifs 11, 21, 30. Ces entretoises ne sont pas représentées sur l'illustration schématique de la figure 1.

Après essai, il s'est avéré que les dispositions illustrées sur la figure 1 fournissent une solution théorique aux problèmes précités mais que cependant ces dispositions ne donnent pas totalement satisfaction dans la pratique.

En effet, d'une part, les dispositions représentées sur la figure 1 requièrent la présence de liaisons conductrices 40, 41, sur les éléments 10, 20, en parallèle des pistes 11, 12 et 21, 22, respectivement. la largeur et le coût des éléments correspondants sont donc augmentés sensiblement. D'autre part, dans certaines configurations, on peut trouver six résistances de contact curseur/piste, en série, ce qui perturbe largement la mesure.

la présente invention vient maintenant éliminer l'ensemble des inconvénients précités grâce à un dispositif comprenant au moins une entretoise qui relie le carter et l'élément définissant les pistes, au moins deux flotteurs de part et d'autre de l'entretoise et des moyens assurant que au moins le curseur du flotteur supérieur soit séparé d'au moins l'une des pistes lorsqu'il atteint la phase finale inférieure de son déplacement adjacente à l'entretoise.

D'autres caractéristiques, buts et avantages de la présente invention apparaîtront à la lecture de la description détaillée qui va suivre, et en regard des dessins annexés, donnés à titre d'exemple et sur lesquels :
- la figure 1 représente une vue schématique de la solution antérieurement envisagée par la Demanderesse,
- la figure 2 représente une vue schématique du dispositif conforme à la présente invention,
- les figures 3 et 4 représentent deux vues en coupe longitudinale, respectivement orthogonales entre elles, d'un dispositif conforme à la présente invention,
- les figures 5, 6 et 7 représentent trois vues en coupe transversale du même dispositif selon des plans de coupe référencés respectivement V-V, VI-VI et VII-VII sur les figures 3 et 4, et
- les figures 8 et 9 représentent des vues du même dispositif illustré par les flèches référencées VIII et IX sur les figures 3 et 4 tandis que
- la figure 10 représente une vue schématique de la courbe de réponse obtenue avec un dispositif conforme à la présente invention.

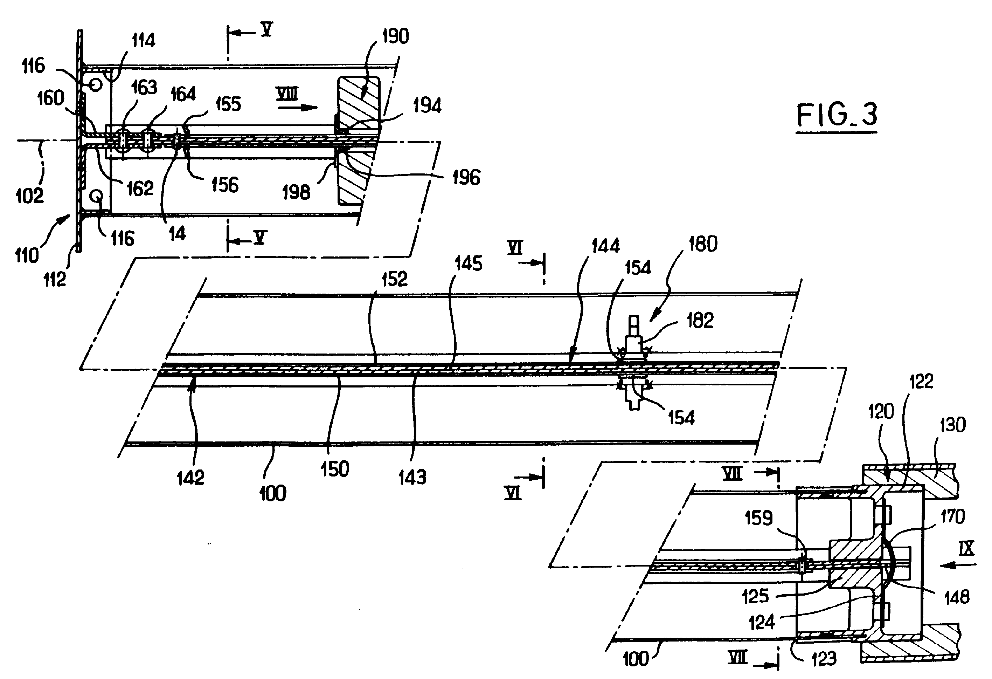

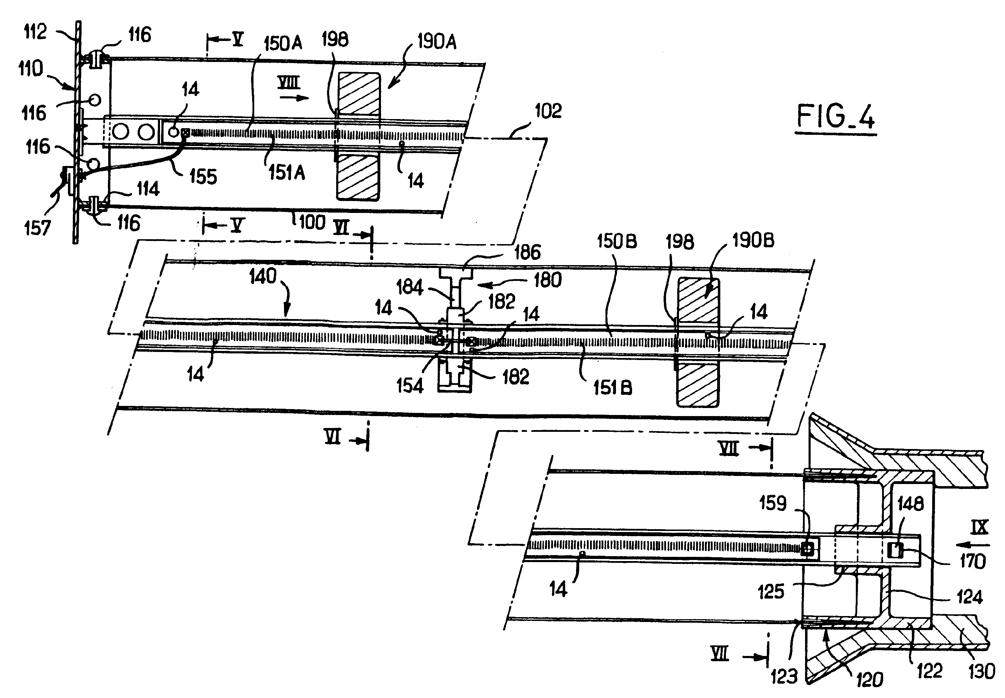

On distingue sur les figures 3 et 4 le carter 100. Celui-ci est formé avantageusement d'un tube cylindrique dont l'axe 102 est vertical à l'utilisation. Cependant, on notera que, en variante, la section du carter peut être autre que circulaire. Le carter peut par exemple avoir une section polygonale quelconque. De même, si de préférence, l'axe 102 du carter est vertical, on notera que cet axe 102 peut présenter à l'utilisation au moins une légère inclinaison sur la verticale.

Le carter 100 est fixé à son extrémité supérieure sur une embase supérieure 110. Cette embase supérieure 110 comprend un plateau 112 orthogonal à l'axe 102 et une collerette annulaire 114. Cette collerette annulaire 114 est fixée sur l'extrémité supérieure du carter 100 par tout moyen classique approprié, par exemple à l'aide de rivets 116.

A son extrémité inférieure, le tube 100 est engagé dans une embase inférieure 120. L'embase inférieure 120 comprend un fourreau cylindrique 122, une toile 124 et un manchon central 125. Le fourreau 122 est centré sur l'axe 102. Il présente une gorge annulaire 123 qui reçoit l'extrémité inférieure du carter 100. De préférence l'extrémité inférieure du carter 100 est clipsée dans la gorge 123 comme illustré sur la figure 3. La toile 124 s'étend à l'intérieur du fourreau 122 transversalement à l'axe 102. Le manchon 120 est porté par la toile 124 sur la face supérieure de celle-ci. Il est centré sur l'axe 102. Le fourreau 122 est lui-même reçu dans une pièce de centrage 130. Celle-ci peut faire l'objet de nombreux modes de réalisation et ne sera donc pas décrite plus en détail par la suite.

Le carter loge un élément central 140. Celui-ci est formé de deux éléments support 142, 144, longitudinaux, verticaux et symétriques par rapport l'axe 102 du carter.

Les éléments support 142, 144, sont formés de préférence de profilés métalliques du type cornière à section en C. Les éléments support 142, 144, sont adossés de sorte que leurs âmes 143, 145, soient en contact et que leurs concavités soient dirigées dans des directions opposées. Les deux éléments support 142, 144, supportent sur la surface extérieure libre de leurs âmes respectives 143, 145, chacun une réglette 150, 152. Les réglettes sont formées de circuit imprimé classique ou en couche épaisse sur substrat isolant par exemple verre ou céramique. Elles comprennent chacune au moins une piste.

Il peut ainsi être prévu une réglette 150, 152, unique sur chacun des éléments support 142, 144. Dans ce cas là, chacune des réglettes 150, 152 s'étend sur la quasi totalité de la hauteur des éléments support 142, 144. En variante, comme illustré schématiquement sur la figure 4, on peut envisager de superposer sur chacun des éléments support 142, 144, plusieurs réglettes qui ne s'étendent que sur une partie de la hauteur des éléments support, telles que les réglettes référencées 150A, 150B sur la figure 4 annexée.

Dans ce cas, il est nécessaire de relier entre elles en série les pistes prévues sur ces diverses réglettes 150A, 150B, à l'aide de tout moyen classique approprié tel que par exemple de liaisons soudées référencées schématiquement 154 sur la figure 4.

De préférence. les réglettes 150, 152 sont fixées sur des éléments support 142, 144, à l'aide de rivets 14. Ceux-ci sont engagés dans des alésages oblongs s'étendant parallèlement à l'axe 102, ménagés dans les réglettes 142, 144. L'agencement oblong des alésages recevant les rivets 14 autorise un déplacement longitudinal relatif entre les réglettes 150, 152 et les éléments support 142, 144.

A leur extrémité supérieure les éléments support 142, 144, sont fixés sur l'embase supérieure 110, à l'aide de deux équerres 160, 162 respectivement. A titre d'exemple non limitatif les équerres 160, 162 peuvent être soudées sur l'embase supérieure 110 tandis qu'elles sont fixées sur les éléments support 142, 144 à l'aide de rivets 163, 164.

A leur extrémité inférieure, les éléments support 142, 144 ne sont pas fixés rigidement sur l'embase inférieure 120. Par contre, il est prévu au niveau de l'embase 120 des moyens assurant une sollicitation élastique vers le bas sur les élements support 142, 144, afin de maintenir constamment les réglettes 150, 152 sous tension. Les moyens de sollicitation pourront faire l'objet de nombreux modes de réalisation. Selon le mode de réalisation préférentiel représenté sur les figures annexées, ces moyens de sollicitation sont formés d'une lame élastique 170. Celle-ci est engagé dans une lumière 148 ménagée dans l'extrémité inférieure des éléments support 142, 144. Par ailleurs, comme représenté sur la figure 3, la lame élastique 170 prend appui sur la surface inférieure de la toile 124.

Selon la représentation des figures annexées, il est prévu une entretoise entre le carter 100 et les éléments support 142, 144, sensiblement à mi-longueur du tarter 100.

Selon le mode de réalisation préférenciel représenté sur les figures annexées, l'entretoise 180 comprend un fût central 182 fixé sur les éléments support 142, 144, par tout moyen classique approprié, tel que par exemple par soudure ou par rivet.

Le fût central 182 porte trois bras 184 généralement radiaux qui cependant se raccordent tangentiellement sur le fût 182. Chacun des bras 184 porte à son extrémité radialement externe un patin 186 qui repose sur la surface intérieure du carter 100.

Selon le mode de réalisation représenté sur les figures annexées, dans la mesure où il est prévu une entretoise 180, le dispositif comprend deux flotteurs 190 disposés respectivement de part et d'autre de l'entretoise, plus précisément un flotteur supérieur 190A et un flotteur inférieur 190B.

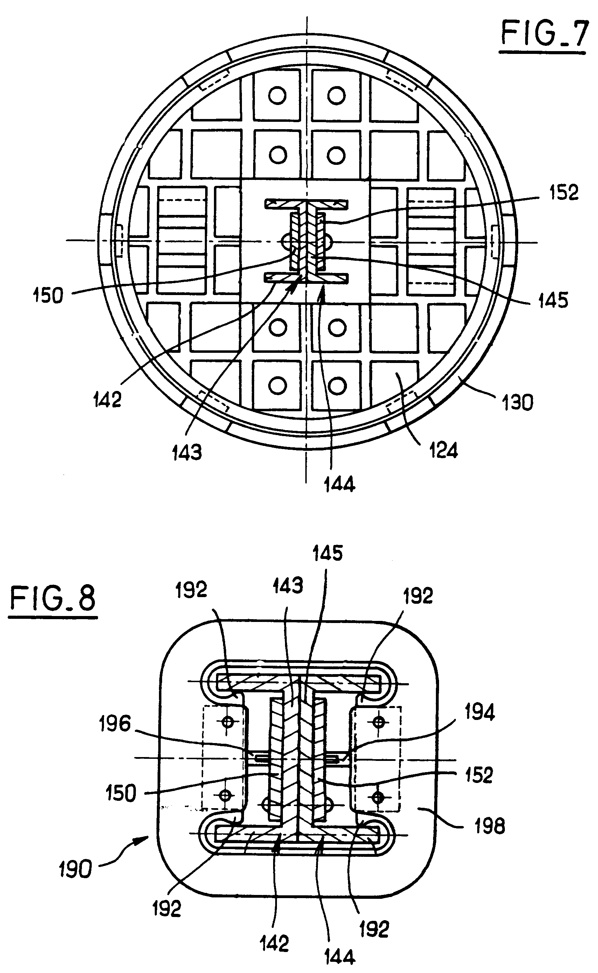

Les flotteurs 190 sont de préférence identiques. Les flotteurs 190 ont la forme générale d'un corps annulaire engagé sur les éléments supports 142, 144. Les flotteurs 190 sont guidés à coulissement sur les éléments support 142, 144, parallèlement à l'axe 102, à l'aide de tout moyen classique approprié connu de l'homme de l'art. Selon la représentation donnée sur la figure 8, chaque flotteur 190 comprend des bossages 192 qui reposent sur la surface interne de chacune des deux ailes 146, 147, des profilés support 142, 144.

Par ailleurs, chacun des flotteurs 190 comprend un curseur qui relie les deux pistes prévues respectivement sur chacune des réglettes 150, 152. Selon la représentation donnée sur la figure 8, le curseur est formé de deux frotteurs 194, 196, respectivement en contact avec l'une des pistes et reliés entre eux par une plaquette électriquement conductrice 198.

Comme indiqué précédemment, selon la présente invention, il est prévu des moyens assurant que au moins le curseur du flotteur supérieur 190A soit séparé d'au moins l'une des pistes associées lorsqu'il atteint la face finale inférieure de son déplacement adjacente à l'entretoise 180.

Comme illustré schématiquement sur la figure 2 annexée, ces moyens peuvent être formés par le fait que l'une au moins des pistes, au niveau de sa zone adjacente à une entretoise 180 et superposée à celle-ci s'écarte du trajet du curseur 194, 196. Ainsi, lorsque le flotteur 190 correspondant vient reposer contre l'entretoise 180, il est placé automatiquement hors circuit et rend actif le curseur porté par le flotteur immédiatement inférieur comme cela apparaît à l'examen de la figure 2.

Plus précisément, si le niveau de liquide dans le réservoir est placé au-dessus de l'entretoise 180, l'information de niveau ou de volume prélevée entre les deux bornes supérieures des pistes dépend directement de la position du flotteur supérieur 190A.

Si le niveau de liquide est situé en dessous de l'entretoise 180, l'information de niveau ou de volume mesurée entre les deux bornes supérieures des pistes dépend uniquement de la position du flotteur inférieur 190B.

En variante, on peut prévoir que les pistes électriques portées par les réglettes 150, 152, s'étendent en regard du trajet de déplacement des curseurs, sur toute la hauteur de ce trajet, mais qu'il est prévu des moyens, par exemple portés par chaque entretoise 180, pour écarter le curseur de l'une au moins des pistes lorsque le flotteur correspondant atteint la phase finale inférieure de son déplacement adjacente à l'entretoise.

Bien entendu la présente invention n'est pas limitée à l'utilisation d'une entretoise et deux flotteurs. Elle s'étend d'une façon générale à tout dispositif comprenant x entretoises 180 et x + 1 flotteurs 190 disposés respectivement de part et d'autre d'une entretoise.

Dans le cas par exemple où, comme illustré schématiquement sur la figure 2, le dispositif comprend deux entretoises et trois flotteurs 190A, 190B et 190C, l'information de niveau ou de volume dépend de la position du flotteur supérieur 190A si le niveau de liquide est au-dessus de l'entretoise supérieure, l'information dépend de la position du flotteur intermédiaire 190B si le niveau du liquide est entre les deux entretoises 180, et enfin l'information dépend de la position du flotteur inférieur 190C si le niveau du liquide est inférieur à l'entretoise inférieure.

Bien entendu le volume interne du carter 100 doit communiquer avec le réservoir à jauger, pour permettre un déplacement fidèle et représentatif des flotteurs 190.

Sur les figures annexées, on a référencé 151 et 153 les pistes prévues respectivement sur les réglettes 150, 152. On rappelle que l'une au moins des deux pistes 151, 153 est électriquement résistante. Par ailleurs, on a référencé 155 et 156, sur les figures annexées des liaisons filaires soudées sur les extrémités supérieures des pistes 151, 153, respectivement et soudées sur des bornes 157, 158 elles-mêmes fixées sur le plateau 112 de l'embase supérieure 110. L'homme de l'art comprendra aisément que l'information représentative du niveau et/ou du volume de liquide contenu dans le réservoir est obtenue par mesure de la résistance entre les deux bornes 157 et 158.

De préférence, à leur extrémité inférieure, les pistes 151, 153, sont reliées entre elles par un rivet 159 représenté sur les figures 3 et 4.

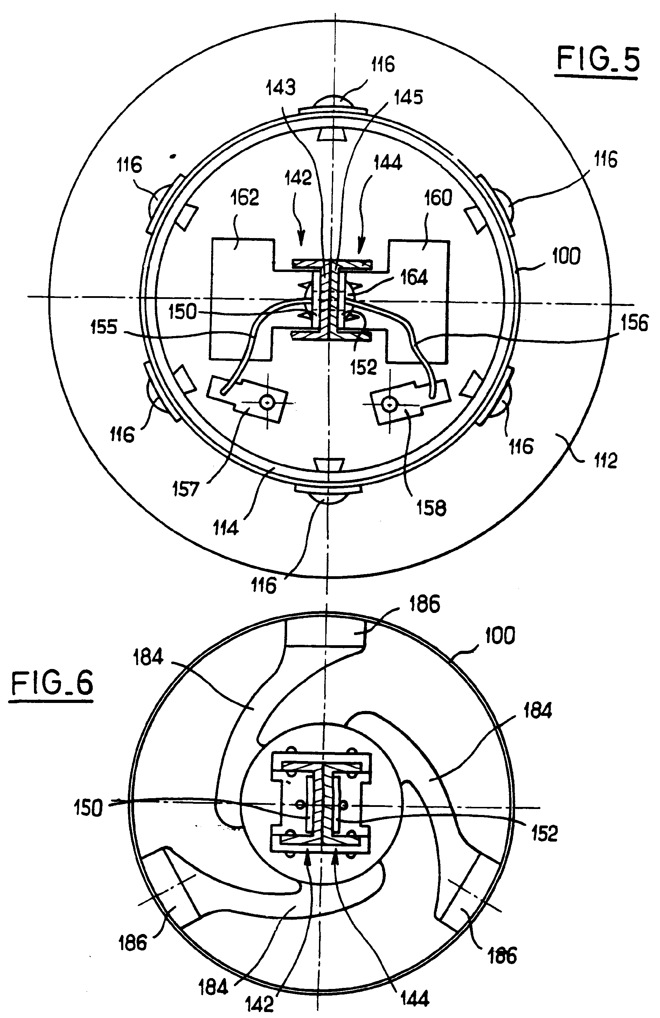

L'homme de l'art comprendra aisément que la géométrie de l'entretoise 180 représentée sur les figures annexées, en particulier sur la figure 6, et dont les bras se raccordent tangentiellement au fût central 182, permet, d'une part, de limiter notablement la transmission des efforts externes ou vibrations ressenti(e)s par le carter aux éléments support (142, 144) et aux réglettes 150, 152 portées par ceux-ci et, d'autre part autorise une dilatation thermique différentielle entre le carter 100 et les éléments support 142, 144.

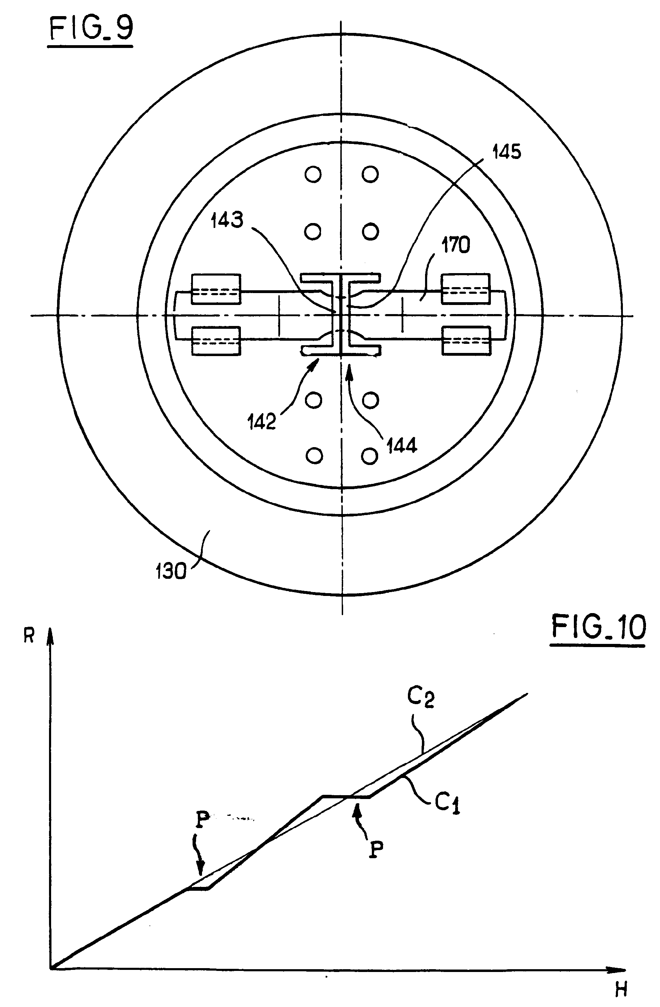

On a représenté schématiquement sur la figure 10 annexée sous la référence C1 une courbe réelle de résistance mesurée entre les deux bornes 157, 158, en fonction de la hauteur du liquide dans le réservoir, et sous la référence C2 la courbe théorique recherchée. On notera que la courbe réelle présente des paliers P qui correspondent avec les phases au cours desquelles les curseurs sont successivement déconnectés des pistes. Il en résulte que la courbe réelle CI ne peut suivre fidèlement la courbe théorique C2. Cependant, l'homme de l'art sait, grâce notamment aux dispositions décrites dans les documents antérieurs cités dans le préambule de la présente demande, corriger à volonté la valeur de résistance mesurée pour se rapprocher au mieux de la courbe théorique C2. Par ailleurs, on notera que la précision de la mesure est prépondérante pour les faibles niveaux ou volumes de liquide restant dans le réservoir. De ce fait, de préférence, la valeur résistive des pistes 151, 153 sera adaptée, comme illustré sur la figure 10, pour suivre fidèlement la courbe théorique C2 pour les valeurs les plus faibles du niveau de liquide pour lesquelles seul le curseur porté par le flotteur inférieur est actif.

Le cas échéant, l'une des réglettes peut être supprimée. La piste correspondante est alors fermée par l'un des éléments support.

## Revendications

1. Dispositif de mesure du niveau ou du volume de liquide, contenu dans un réservoir, comprenant un carter (100) qui loge un élément (150,152) définissant deux pistes électriques séparées (151, 153), généralement verticales, dont l'une au moins électriquement résistante, et un flotteur (190) apte à suivre le niveau du liquide et qui porte un curseur (194, 196) apte à relier les deux pistes (151,153) caractérisé par le fait qu'il comprend au moins une entretoise (180) qui relie le carter (100) et l'élément définissant les pistes (151, 153), au moins deux flotteurs (190) disposés de part et d'autre de l'entretoise (180) et des moyens (151,153;180) assurant que au moins le curseur (194,196) du flotteur supérieur (190A) soit séparé d'au moins l'une des pistes (151, 153) lorsqu'il atteint la phase finale inférieure de son déplacement adjacente à l'entretoise (180).

2. Dispositif de mesure selon la revendication 1, caractérisé par le fait que l'élément définissant deux pistes électriques (151, 153) comprend un support (142, 144) qui porte deux réglettes de circuit imprimé (142, 144) munies chacune d'une piste (151, 153).

3. Dispositif de mesure selon la revendication 2, caractérisé par le fait que l'élément support (142,144) est formé de deux cornières en U (142,144).

4. Dispositif de mesure selon l'une des revendications 2 et 3, caractérisé par le fait que les réglettes (150,152) sont fixées sur l'élément support (142, 144) à l'aide de rivets (14) engagés dans des alésages oblongs ménagés dans les réglettes (150,152).

5. Dispositif de mesure selon l'une des revendications 1 à 4, caractérisé par le fait que l'élément définissant les pistes (151, 153) est sollicité vers le bas à son extrémité inférieure.

6. Dispositif de mesure selon la revendication 5, caractérisé par le fait que la sollicitation est exercée sur l'élément définissant les pistes (151, 153) par une lame élastique (170).

7. Dispositif de mesure selon l'une des revendications 1 à 6, caractérisé par le fait qu'il comprend X entretoises (180) et X+1 flotteurs (190).

8. Dispositif de mesure selon l'une des revendications 1 à 7, caractérisé par le fait que chaque entretoise (180) comprend un fût central (182) fixé sur l'élément définissant les pistes (151, 153) et une pluralité de bras (184) généralement radiaux qui se raccordent tangentiellement sur le fût (182).

9. Dispositif de mesure selon la revendication 8, caractérisé par le fait que chacun des bras (184) est muni à son extrémité radialement externe d'un patin (186) qui repose contre la surface interne du carter (100).

10. Dispositif de mesure selon l'une des revendications 1 à 9, caractérisé par le fait qu'il comprend des pistes (151, 153) présentant une hauteur supérieure à 1 mètre.

11. Dispositif de mesure selon l'une des revendications 1 à 10, caractérisé par le fait que les moyens assurant que au moins le curseur du flotteur supérieur (190) soit séparé d'au moins l'une des pistes (151, 153) lorsqu'il atteint la phase finale inférieure de son déplacement adjacente à une entretoise (180) sont formés par le fait que dans sa zone adjacente à une entretoise (180) superposée à celle-ci, l'une au moins des pistes s'écarte du trajet du curseur.

## Patentansprüche

1. Vorrichtung zum Messen des Füllstandes oder des Flüssigkeitvolumens in einem Behälter mit einem Gehäuse (100), das ein Element (150, 152) enthält, welches zwei getrennte weitgehend vertikale elektrische Leiterbahnen (151, 153) bildet, von denen mindestens eine elektrisch resistent ist, und mit einem Schwimmer (190), der dem Füllstand der Flüssigkeit folgt und einen Gleitkontakt (194, 196) aufweist, der die beiden Leiterbahnen (151, 153) verbinden kann,
**dadurch gekennzeichnet, daß** sie mindestens ein Abstandsstück (180) aufweist, das das Gehäuse (100) und das die Leiterbahnen (151, 153) bildende Element verbindet, und daß sie mindestens zwei Schwimmer (190) enthält, die auf beiden Seiten des Abstandsstückes (180) angeordnet sind, sowie Mittel (151, 153; 180), welche gewährleisten, daß mindestens der Gleitkontakt (194, 196) des oberen Schwimmers (190A) mindestens von einer der Leiterbahnen (151, 153) getrennt ist, wenn er die untere Endphase seiner Verschiebung an dem Abstandsstück (180) erreicht.

2. Meßvorrichtung nach Anspruch 1,
**dadurch gekennzeichnet, daß** das die beiden elektrischen Leiterbahnen (151, 153) bildende Element ein Auflager (142, 144) aufweist, welches zwei Klemmleisten für eine gedruckte Schaltung (142, 144) trägt, die jeweils mit einer Leiterbahn (151, 153) versehen sind.

3. Meßvorrichtung nach Anspruch 2,
**dadurch gekennzeichnet, daß** das Auflager (142, 144) aus zwei U-förmigen Winkelprofilen (142, 144) gebildet ist.

4. Meßvorrichtung nach einem der Ansprüche 2 und 3,
**dadurch gekennzeichnet, daß** die Klemmleisten (150, 152) an dem Auflager (142, 144) mit Hilfe von Nieten (14) befestigt sind, die in längliche Bohrungen in den Klemmleisten (150, 152) eingreifen.

5. Meßvorrichtung nach einem der Ansprüche 1 bis 4,
**dadurch gekennzeichnet, daß** das die Leiterbahnen (151, 153) bildende Element an seinem unteren Ende nach unten beansprucht wird.

6. Meßvorrichtung nach Anspruch 5,
**dadurch** **gekennzeichnet, daß** die Beanspruchung des Elementes, das die Leiterbahnen (151, 153) bildet, durch eine elastische Lamelle (170) erfolgt.

7. Meßvorrichtung nach einem der Ansprüche 1 bis 6,
**dadurch gekennzeichnet, daß** sie X Abstandsstücke (180) und X-1 Schwimmer (190) aufweist.

8. Meßvorrichtung nach einem der Ansprüche 1 bis 7,
**dadurch gekennzeichnet, daß** jedes der Abstandsstücke (180) eine zentrale Hülse(182) aufweist, die an dem Element befestigt ist, das die Leiterbahnen (151, 153) bildet, sowie eine Vielzahl von weitgehend radialen Armen (184), die tangential an die Hülse (182) anschließen.

9. Meßvorrichtung nach Anspruch 8,
**dadurch gekennzeichnet, daß** jeder der Arme (184) an seinem radial äußeren Ende eine Gleitkufe (186) aufweist, die an der Innenfläche des Gehäuses (100) anliegt.

10. Meßvorrichtung nach einem der Ansprüche 1 bis 9,
**dadurch gekennzeichnet, daß** sie Leiterbahnen (151, 153) mit einer Höhe von mehr als 1 Meter aufweist.

11. Meßvorrichtung nach einem der Ansprüche 1 bis 10,
**dadurch gekennzeichnet, daß** die Mittel, die gewährleisten, daß mindestens der Gleitkontakt das oberen Schwimmers (190) mindestens von einer der Leiterbahnen (151, 153) getrennt ist, wenn er die untere Endphase seiner Bewegung an einem Abstandsstück (180) erreicht, dadurch gebildet werden, daß sich in ihrem benachbarten Bereich zu einem darüberliegenden Abstandsstück (180) mindestens eine der Leiterbahnen von der Laufbahn des Gleitkontakts löst.

## Claims

1. A device for the measurement of the level or volume of liquid contained in a reservoir, comprising a casing (100) that houses an element (150,152) defining two generally vertical, separate electrical tracks (151, 153), at least one of which is electrically resistant, and a float (190) that is capable of following the level of the liquid and bears a slider (194, 196) capable of connecting the two tracks (151,153), characterized in that it comprises at least one spacer (180) that connects the housing (100) and the element defining the tracks (151, 153), at least two floats (190) placed on either side of the spacer (180) and means (151, 153, 180) ensuring that at least the slider (194, 196) of the upper float (190A) is separated from at least one of the tracks (151, 153) when it reaches the lower final stage of its movement adjacent to the spacer (180).

2. A measuring device according to claim 1, characterized in that the element defining the two electri cal tracks (151,153) includes a support (142, 144) bearing two printed circuit terminal strips (142, 144), each provided with a track (151, 153).

3. A measuring device according to claim 2, characterized in that the supporting element (142, 144) is formed by two U-shaped angles (142, 144).

4. A measuring device according to one of claims 2 or 3, chatacterized in that the terminal strips (150, 152) are fixed to the supporting element (142, 144) by means of rivets (14) engaged in elongated drillings made in the terminal strips (150, 152).

5. A measuring device according to one of claims 1 to 4, characterized in that the element defining the tracks (151, 153) undergoes a downward stress at its lower end.

6. A measuring device according to claim 5, characterized in that the stress is exerted on the element defining the tracks (151, 153) by an elastic strip (170).

7. A measuring device according to one of claims 1 to 6, characterized in that it comprises X spacers (180) and X+1 floats (190).

8. A measuring device according to one of claims 1 to 7, characterized in that each spacer (180) comprises a central shaft (182) fixed to the element defining the tracks (151, 153) and a plurality of generally radial arms (184) that are tangentially attached to the shaft (182).

9. A measuring device according to claim 8, characterized in that each of the arms (184) is provided, at its externally radial end, with a skid (186) resting against the internal surface of the casing (100).

10. A measuring device according to one of claims 1 to 9, characterized in that it comprises tracks (151, 153) with a height of more than one meter.

11. A measuring device according to one of claims 1 to 10, characterized in that the means ensuring that at least the slider of the upper float (190) is separated from at least one of the tracks (151, 153) when it reaches the lower final stage of its movement adjacent to a spacer (180), are formed by the fact that, in its zone adjacent to a spacer (180) superimposed on it, at least one of the tracks diverges from the path of the slide.
